# EUROPÄISCHE PATENTANMELDUNG

(11) **EP 0 872 658 A1**
(43) Veröffentlichungstag der Anmeldung: **21.10.1998**
(21) Anmeldenummer: 98104377.1
(22) Anmeldetag: 11.03.1998
(51) Int. Cl.: F16D 65/12

(54) **Bremsscheibe, insbesondere eine innenbelüftete Bremsscheibe**

(30) Priorität: 19.04.1997 DE 19716568
(71) Anmelder: Dr.Ing.h.c. F. Porsche Aktiengesellschaft, 70435 Stuttgart (DE)
(72) Erfinder: Martin, Roland, 71287 Weissach (DE)

(57) **Zusammenfassung**

Eine Bremsscheibe, insbesondere eine innenbelüftete Bremsscheibe, weist einen Bremsring (2) auf, der über Verbindungselemente mit einem Bremsscheibentopf (5) verbunden ist. Die Verbindungselemente sind konzentrisch zum Bremsscheibentopf angeordnet und durchdringen sich überlappende Ringstege (7,8) des Bremsringes (2) und des Bremsscheibentopfes (5).

Der Bremsring (2) ist mit dem Bremsscheibentopf (5) über Niete (6) oder Bolzen (20) verbunden, wobei die Niete (6) in Hülsen (9) angeordnet sind und sich zwischen dem Schließkopf (6a;6b) bzw. dem Kopf des Nietes und einem Sicherungsring (22) des Bolzens zur Außenoberfläche des ringsteges des Bremsscheibentopfes oder des Bremsringes ein Überstand bzw. ein Zwischenraum von wenigen hunderstel Millimeter ergibt.

## Beschreibung

Die Erfindung bezieht sich auf eine Bremsscheibe, insbesondere eine innenbelüftete Bremsscheibe nach dem Oberbegriff des Anspruchs 1.

Aus der DE 44 46 017 A1 ist eine Bremsscheibe, insbesondere eine innenbelüftete Bremsscheibe bekannt, bei der ein Bremsring mit einem Bremsscheibentopf über Befestigungsschrauben verbunden ist. Die Schrauben sind jeweils in Hülsen gehalten. Diese Hülsen weisen einen Überstand auf und mittels einer zwischengeschalteten Tellerfeder, welche von einem Kopf einer Befestigungsschraube beaufschlagt wird, erfolgt eine Verspannung der beiden zu verbindenden Bremsscheibenteile.

Aufgabe der Erfindung ist es, eine verbesserte Verbindung eines Bremsscheibenringes mit einem Bremsscheibentopf zu schaffen, mit der ein Bremsenquietschen vermieden bzw. weitestgehend unterbunden wird.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsachlich erzielten Vorteile bestehen darin, daß durch eine Niet- bzw. Bolzenverbindung eine Bedämpfung von axialen Schwingungsanregungen beim Bremsvorgang erzielt wird, wobei diese Verbindung einen definierten Abstand zwischen einem Kopf der Verbindung und einer Verbindungsfläche am Bremsentopf oder Bremsenring bedingt.

Insbesondere tritt eine Bedämpfungswirkung durch Trennung der Bremsscheibenteile, wie dem Bremsscheibenring und dem Bremsscheibentopf sowie durch eine definierte Vorspannung des Bremsscheibenringes und -topfes durch Variation des Überstandes einer verwendeten Hülse in Zusammenhang mit der Nietverbindung ein. Bei einer weiteren Ausführung mit einem Bolzen und aufgepresstem Sicherungsring wird ebenfalls ein Überstand erzielt. Des weiteren wird der Effekt der Bedämpfung durch Einbringung eines hochdämpfenden Materials zwischen den beiden aufeinanderliegenden Ringflächen des Bremsscheibenringes und -topfes ermöglicht.

Der Hülsenüberstand bzw. der Abstand des Sicherungsringes am Bolzen beträgt nur wenige hunderstel Millimeter und der Schließkopf bzw. der Kopf des Nietes übergreift das Hülsenstirnende, so daß ein Zwischenraum verbleibt. In jedem Fall ist gewährleistet, daß zwischen Bremsscheibenring und Bremsscheibentopf hinsichtlich einer Schwingungsanregung eine Trennung erfolgt und die Bremsscheibenteile schwingungstechnisch voneinander abkoppelbar sind, d.h., daß die aufeinanderliegenden Ringflächen des Bremsscheibentopfes und des Bremsscheibenringes eine minimale mögliche Bewegungsmöglichkeit zueinander aufweisen.

Ausführungsbeispiele der Erfindungen sind in den Zeichnungen dargestellt und werden im folgenden näher beschrieben.

Es zeigen
- Fig. 1: eine Verbindung zwischen Bremsscheibentopf und Bremsring im Schnitt,
- Fig. 2: eine weitere Ausführung einer Anordnung des Bremsscheibentopfes zum Bremsring,
- Fig. 3: eine vergrößerte Einzelheit X des Hülsenüberstandes und
- Fig. 4: eine weitere Ausführung mit einem Bolzen und Sicherungsring.

Eine innenbelüftete Bremsscheibe 1 umfaßt zwei miteinander über Rippen 4 verbundene Bremsringe 2, 3, die an einem Bremsscheibentopf 5 über Verbindungselemente 6; 20 befestigbar sind.

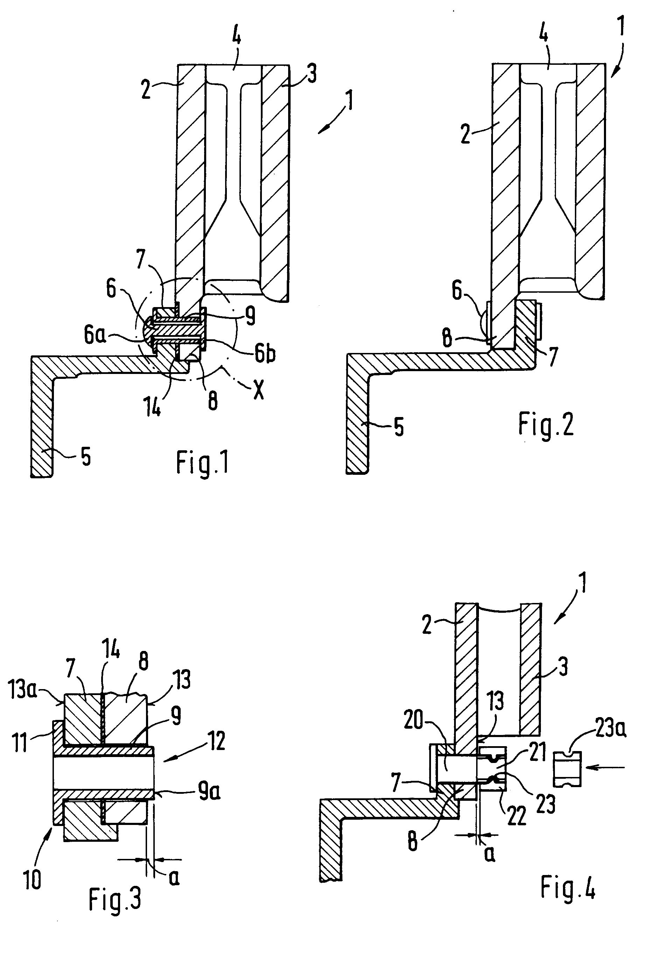

Zum Befestigen des Bremsringes 2 am Bremsscheibentopf 5 sind an jedem Bremsscheibenteil 2, 5 ein Ringsteg 7, 8 vorgesehen, die gegenüberstehend miteinander verbunden sind. Der Ringsteg 8 kann innenliegend gemäß Fig. 1 oder außenliegend gemäß Fig. 2 des Ringsteges 7 des Bremsscheibentopfes 5 angeordnet sein.

Die Verbindung der beiden Bremsscheibenteile 5 uns 2 erfolgt gemäß den Fig. 1 bis 3 über Niete, wobei jedes Niet in einer Hülse 9 angeordnet ist. Diese Hülse 9 durchdringt Bohrungen in den Ringstegen 7, 8 der Bremsscheibenteile 2 und 5 und stützt sich mit ihrem einen Ende 10 über einen Rand 11 an einem Ringsteg 7 oder 8 ab. Das andere abgekehrte freie Ende 12 der Hülse 9 ist mit einem Überstand a zur Außenoberfläche 13 des Ringsteges 7 oder 8 ausgeführt, wie Fig. 3 in einer Vergrößerung näher zeigt. Bei einer Vernietung bleibt dieser Spalt bestehen, der etwa zwei hunderstel Millimeter beträgt bzw. in einem Bereich von 2 bis 5/100 mm liegt. Dieses Maß wird entsprechend den Gegebenheiten definiert.

Die Nietung erfolgt so, daß der Kopf 6a auf dem Rand 11 aufliegt und der Schließkopf 6b den überstehenden Teil der Hülse übergreift. Es wäre aber auch eine umgekehrte Anordnung des Nietes 6 möglich, so daß der Kopf 6a das freie Ende der Hülse 9 übergreift und der Schließkopf 6b den Rand 11 abdeckt.

Zwischen den gegenüberstehenden Verbindungsflächen der Ringstege 7 und 8 ist ein hochdämpfendes Material in Form eines Dämpfungsbleches vorgesehen, das beispielsweise eine elastomere Schicht an beiden Seiten aufweist.

Nach einer weiteren Ausführung gemäß Fig. 4 erfolgt die Verbindung des Bremsscheibentopfes mit dem Bremsscheibenring über Bolzen 20, wobei jeweils am Bolzenende 21 ein Sicherungsring 22 vorgesehen ist, der auf das Bolzenende aufgepresst wird. Der Sicherungsring 22 ist im Abstand a zur Außenoberfläche 13 angeordnet, so daß sich, wie bei der Ausführung gemäß der Fig. 1 bis 3 mit Hülse 9 ein gleicher Abstand a ergibt. Das Aufpressen des Sicherungsringes 22 erfolgt mittels einer Ringrille 23 im Bolzen 20, in welche Material des Sicherungsringes 23 eingepresst wird und sich ein Formschluss zwischen dem Bolzen und dem Sicherungsring ergibt.

## Patentansprüche

1. Bremsscheibe, insbesondere innenbelüftete Bremsscheibe, mit mindestens einem Bremsring, der über Verbindungselemente mit einem Bremsscheibentopf verbunden ist, und die Verbindungselemente konzentrisch zum Bremsscheibentopf angeordnet sind und sich überlappende Ringstege des Bremsringes und des Bremsscheibentopfes durchdringen, dadurch gekennzeichnet, daß der Bremsring (2) mit dem Bremsscheibentopf (5) über Miete (6) verbunden ist, welche jeweils in einer Hülse (9) mit einem endseitigen Überstand (a) der Außenfläche (13) des Ringsteges (8 oder 9) angeordnet sind und ein in Hülsen gehaltener Niet- bzw. Schließkopf (6a bzw. 6b) die überstehende Hülsenstirnfläche (9a) zur Befestigung übergreift.

2. Bremsscheibe nach Anspruch 1, dadurch gekennzeichnet, daß die Hülse (9) an einem Ende (10) einen dem Nietkopf (6a) bzw. den Schließkopf (6b) zugerichteten Rand (11) als Abstütz- und Anlagefläche aufweist und das abgekehrte andere Ende (12) mit dem Überstand (a) ausgebildet ist und dieser als Maß für eine in Abhängigkeit von einer definierten Vorspannung der Verbindung des Bremsringes (2) mit dem Bremsscheibentopf (5) ausgeführt ist.

3. Bremsscheibe nach den Ansprüchen 1 oder 2, dadurch gekennzeichnet, daß zwischen den sich überlappenden Ringstegen (8) des Bremsscheibentopfes (5) und des Bremsringes (2) der Bremsscheibe (1) ein hochdämpfendes Material angeordnet ist.

4. Bremsscheibe nach Anspruch 3, dadurch gekennzeichnet, daß das hochdämpfende Material auf einem mit elastischen Schichten versehenen Dämpfungsblech (14) angeordnet ist.

5. Bremsscheibe nach den Ansprüchen 1, 2, 3 oder 4, dadurch gekennzeichnet, daß der Ringsteg (8) des Bremsringes (2) innen- oder außenseitig des Ringsteges (7) des Bremsscheibentopfes (5) angeordnet ist.

6. Bremsscheibe nach einem oder mehreren der vorhergehenden Ansprüche, dadurch gekennzeichnet, daß der Hülsenüberstand (a) etwa 2 bis 5/100 mm beträgt.

7. Bremsscheibe nach einem oder mehreren der vorhergehenden Ansprüche, dadurch gekennzeichnet, daß der Hülsenüberstand (a) etwa ein hunderstel Millimeter beträgt.

8. Bremsscheibe, insbesondere innenbelüftete Bremsscheibe, mit mindestens einem Bremsring, der über Verbindungselemente mit einem Bremsscheibentopf verbunden ist und die Verbindungselemente konzentrisch zum Bremsscheibentopf angeordnet sind und sich überlappende Ringstege des Bremsringes und des Bremsscheibentopfes durchdringen, dadurch gekennzeichnet, daß der Bremsring (2) mit dem Bremsscheibentopf (5) über einen Bolzen (20) verbunden ist, der an seinem Bolzenende (21) einen Sicherungsring (22) aufweist, welcher unter Bildung eines Abstandes (a) mit dem Bolzenende (21) verpresst ist.

9. Bremsscheibe nach Anspruch 8, dadurch gekennzeichnet, daß der Bolzen (20) eine umlaufende Einpressrille (23) aufweist, die mit dem aufgepressten Sicherungsring (22) einen Formschluss ergibt.
